# EUROPEAN PATENT APPLICATION

(11) **EP 3 422 128 A1**
(43) Date of publication of application: **02.01.2019**
(21) Application number: 17893506.0
(22) Date of filing: 07.04.2017
(51) Int. Cl.: G05B 23/02

(54) **METHOD AND APPARATUS FOR USE IN REMOTE DIAGNOSIS OF VEHICLE**

(71) Applicant: Launch Tech Co., Ltd., Shenzhen, Guangdong 518129 (CN)
(72) Inventor: LIU, Jun, Shenzhen Guangdong 518129 (CN); CHEN, Zhijian, Shenzhen Guangdong 518129 (CN); CHEN, Xiu, Shenzhen Guangdong 518129 (CN); SHEN, Shelin, Guangdong 518129 (CN); ZHANG, Liang, Shenzhen Guangdong 518129 (CN); ZHANG, Wei, Shenzhen Guangdong 518129 (CN); LI, Jingrui, Shenzhen Guangdong 518129 (CN)
(74) Representative: MERH-IP Matias Erny Reichl Hoffmann Patentanwälte PartG mbB
(86) International application number: PCT/CN2017/079770
(87) International publication number: WO 2018/184221

(57) **Abstract**

The present application provides a vehicle remote diagnosis method, the method is applied to a vehicle diagnosis equipment which is placed on the vehicle as an on-board equipment, a remote communication connection is established between the diagnosis equipment and a remote server, the diagnosis method includes the following steps: receiving a diagnosis instruction sent by the remote server and acquiring real-time vehicle data according to the diagnosis instruction; sending the real-time vehicle data to the remote server; receiving a maintenance operation instruction sent by the remote server and sending a corresponding execution command to the vehicle to perform maintenance according to the maintenance operation instruction. The present application further provides a vehicle remote diagnosis device. The present application is convenient for the remote diagnosis of the vehicle and improves the diagnosis function, increases the accuracy of the analysis and diagnosis, and realizes the remote maintenance of the vehicle.

## Description

### THCHNICAL FIELD

The present application relates to the technical field of vehicle diagnosis technology, and more particularly relates to a vehicle remote diagnosis method and device.

### BACKGROUND

With the development of society, vehicles have become one of the most important travel tools. A variety of fault conditions will occur inevitably to a vehicle during use. In the field of the vehicle diagnosis technology, the traditional fault diagnosis method is driving the vehicle to the maintenance plant so that the fault diagnosis is performed on site by the relevant technical staff with professional equipments. This diagnosis method has a long diagnosis method and needs the technical staff to diagnose on site, and therefore the applicability is low.

With the development of the technology, there are some remote vehicle diagnosis methods having appeared on the market. These methods generally use connectors of OBD (On-Board Diagnostics) systems of vehicles to connect professional diagnosis equipments, such that technicians can diagnose remotely. The remote diagnosis has been realized by those methods, but there are also some drawbacks: every time the remote diagnosis need to be carried out, the connection operation of diagnosis equipments need to be performed, and therefore the vehicle cannot be detected and diagnosed at any time; moreover, performing these connection requires certain professional knowledge, which is inconvenient to the vehicle owner; in addition, the existing remote diagnosis mainly obtains the data of the vehicle remotely and in an unidirectional way, but cannot control and operate the vehicle, the diagnosis function is imperfect.

### SUMMARY OF THE PRESENT APPLICATION

One object of the present application is to provide a vehicle remote diagnosis method and device, aiming at facilitating the vehicle remote diagnosis and improving the diagnosis function.

In order to achieve the above object, the present application provides a vehicle remote diagnosis method, the diagnosis method is applied to a vehicle diagnosis equipment which is placed on the vehicle as the on-board equipment, a remote communication connection is established between the diagnosis equipment and a remote server, and the diagnosis method comprises:
receiving a diagnosis instruction sent by the remote server and acquiring real-time vehicle data according to the diagnosis instruction;
sending the real-time vehicle data to the remote server; and
receiving a maintenance operation instruction sent by the remote server and sending a corresponding execution command to the vehicle to perform maintenance according to the maintenance operation instruction.

Preferably, the step of acquiring real-time vehicle data of the vehicle according to the diagnosis instruction comprises:
acquiring the real-time vehicle data of the vehicle through a vehicle electronic control unit according to the diagnosis instruction.

Preferably, the step of receiving a maintenance operation instruction sent from the remote server and sending a corresponding execution command to the vehicle according to the maintenance operation instruction to perform maintenance comprises:
receiving a fault clearing instruction sent by the remote server and sending a corresponding clearing command to the vehicle according to the fault clearing instruction to clear the fault of the vehicle electronic control unit.

Preferably, the step of receiving a maintenance operation instruction sent from the remote server and sending a corresponding execution command to the vehicle according to the maintenance operation instruction to perform maintenance further comprises:
receiving a data management instruction sent by the remote server and sending a corresponding management instruction to the vehicle according to the data management instruction to manage the data in the vehicle electronic control unit.

Preferably, the step of receiving a maintenance operation instruction sent from the remote server and sending a corresponding execution command to the vehicle according to the maintenance operation instruction to perform maintenance further comprises:
receiving an action testing instruction sent from the remote server and sending a corresponding testing command to the vehicle according to the action testing instruction to perform an action test on the vehicle.

Preferably, the diagnosis equipment is connected to the vehicle through a diagnosis pedestal of the OBD (On-Board Diagnostics) of the vehicle; or
the diagnosis equipment is integrated in the vehicle and connected with the vehicle bus; or
the diagnosis equipment is installed as an independent equipment in the vehicle and connected to the vehicle bus.

Preferably, a real-time socket connection is established between the diagnosis equipment and the remote server.

In addition, in order to achieve the above object, the present application further provides a vehicle remote diagnosis device, the vehicle remote diagnosis device is placed on the vehicle as an on-board equipment, a remote communication connection is established between the vehicle remote diagnosis device and a remote server, the vehicle remote diagnosis device comprising:
a data acquisition module configured to receive a diagnosis instruction sent by the remote server and acquiring real-time vehicle data according to the diagnosis instruction;
a data sending module configured to send the real-time vehicle data to the remote server;
a vehicle maintenance module configured to receive a maintenance operation instruction sent by the remote server and sending a corresponding execution command to the vehicle to perform maintenance according to the maintenance operation instruction.

Preferably, the data sending module is further configured to acquire the real-time vehicle data of the vehicle through a vehicle electronic control unit.

Preferably, the vehicle maintenance module is further configured to receive a fault clearing instruction sent by the remote server and sending a corresponding clearing command to the vehicle according to the fault clearing instruction to clear the fault of the vehicle electronic control unit.

Preferably, the vehicle maintenance module is further configured to receive a data management instruction sent by the remote server and sending a corresponding management instruction to the vehicle according to the data management instruction to manage the data in the vehicle electronic control unit.

Preferably, the vehicle maintenance module is further configured to receive an action testing instruction sent from the remote server and sending a corresponding testing command to the vehicle according to the action testing instruction to perform an action test on the vehicle.

Preferably, the vehicle remote diagnosis device is connected to the vehicle through a diagnosis pedestal of the OBD of the vehicle; or
the vehicle remote diagnosis device is integrated in the vehicle and connected with the vehicle bus; or
the vehicle remote diagnosis device is installed as an independent equipment in the vehicle and connected to the vehicle bus.

Preferably, a real-time socket connection is established between the vehicle remote diagnosis device and the remote server.

The present application receives the diagnosis instruction sent by the remote server and acquires the real-time vehicle data according to the diagnosis instruction; sends the real-time vehicle data to the remote server; receives the maintenance operation instruction sent by the remote server and sends a corresponding execution command to the vehicle to perform maintenance according to the maintenance operation instruction. Through the above methods, the vehicle diagnosis equipment is placed on the vehicle as an on-board equipment and connected to the vehicle for a long time, such that users do not need to repeat the connection operation in each diagnosis, which provides a convenience for users; at the beginning of the diagnosis, the diagnosis equipment directly obtains the real-time vehicle data of the vehicle according to the instructions sent by the remote server, and acquiring the dynamic data flow of the vehicle when the vehicle state changes, which is convenient for the remote maintenance personnel to accurately analyze the vehicle and increases the diagnosis accuracy; when the analysis is completed, the diagnosis equipment can also send the corresponding operation command to the vehicle according to the maintenance operation instruction sent by the remote server to perform the remote maintenance. Therefore, the present application is convenient for the remote diagnosis of the vehicle and improves the diagnosis function, increases the accuracy of the analysis and diagnosis, and realizes the remote maintenance of the vehicle.

### BRIEF DESCRIPTION OF THE DRAWINGS

Fig.1 is a schematic flowchart of a first embodiment of a vehicle remote diagnosis method according to the present application;
Fig.2 is a schematic flowchart of a second embodiment of a vehicle remote diagnosis method according to the present application;
Fig.3 is a schematic flowchart of a third embodiment of a vehicle remote diagnosis method according to the present application;
Fig.4 is a schematic flowchart of a fourth embodiment of a vehicle remote diagnosis method according to the present application;
Fig.5 is a schematic flowchart of functional modules of a first embodiment of a vehicle remote diagnosis device according to the present application.

The realization, functional features and advantages of the present application will be further described with reference to the accompanying drawings.

### DETAILED DESCRIPTION OF THE EMBODIMENT

It should be understood that the specific embodiments described herein are only intended to illustrate but not to limit the present application.

In view of the above-mentioned problems, the present application provides a vehicle remote diagnosis method.

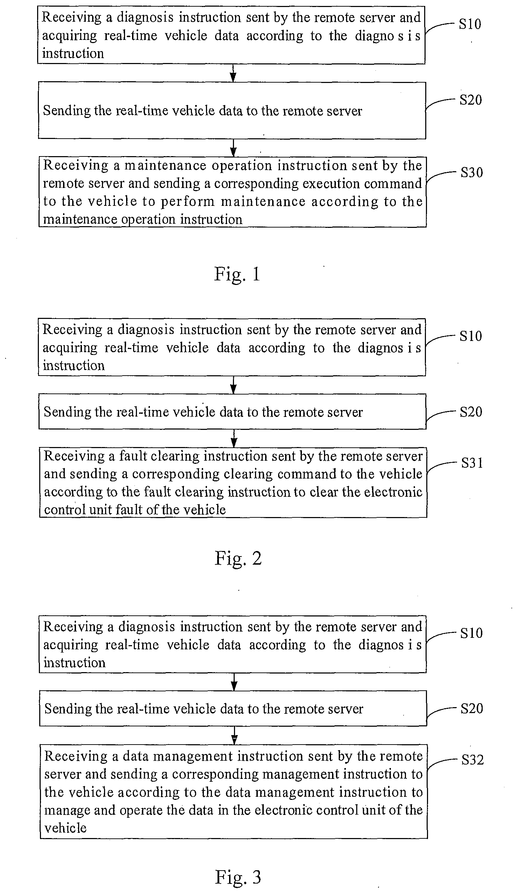

As shown in Fig.1, Fig.1 is a schematic flowchart of a first embodiment of a vehicle remote diagnosis method according to the present application.

In this embodiment, the diagnosis method is applied to a vehicle diagnosis equipment which is placed on the vehicle as the on-board equipment, a remote communication connection with a remote server, the diagnosis method comprising the following steps:
Step S10, receiving a diagnosis instruction sent by the remote server and acquiring real-time vehicle data according to the diagnosis instruction;

In this embodiment, the vehicle remote diagnosis is performed by the vehicle diagnosis equipment. In the existing diagnosis method, when the diagnosis is required, the diagnosis cannot be performed until the professional diagnosis equipment is connected to the OBD connector of the vehicle, and the connection operation must be performed before each diagnosis. In this embodiment, a remote communication device is integrated in the professional diagnosis equipment and made into a vehicle remote diagnosis equipment, and the diagnosis equipment is placed on the vehicle as an on-board equipment, so that the diagnosis equipment can perform the real-time data interaction with the vehicle; a network connection is established between the diagnosis equipment and remote server at the same time, such that the data interaction can be performed between the diagnosis equipment and the remote server. Thus, the owner of the vehicle , at each time for remote diagnosis, does not need to perform the connection operation manually but can directly contact the 4S shop, maintenance plant or personal technician, and the maintenance personnel can thus initiate a remote diagnosis through the diagnosis terminal (PC, mobile APP or WEB page) and obtain the real-time data of the vehicle through the remote server and the diagnosis equipment, in order to analyze the vehicle accurately, some relevant maintenance operation instructions can be sent to the vehicle at the same time, such that the diagnosis and maintenance can be achieved. Specifically, the diagnosis equipment is connected to the vehicle as an on-board equipment for a long time through the OBD diagnosis pedestal of the vehicle, wherein the OBD diagnosis pedestal can be an ordinary OBD diagnosis pedestal or a type II OBD diagnosis pedestal; the diagnosis equipment can also be integrated in the vehicle to connected with the vehicle bus, or installed in the vehicle directly to connected with the vehicle bus as an independent device, wherein the type of the bus could be CANBUS, certainly, in addition to the vehicle bus, the connection can also be performed through the K line, J1850, and so on. The user can choose an appropriate way to install the diagnosis equipment according to the actual situation; the network connection between the diagnosis equipment and remote server can be achieved by a socket connection, the remote server can send data directly to the client to achieve real-time data interaction through the socket connection; In contrast, if an HTTP connection is established between the two sides, the server needs to wait until the client sends a request before the data can be passed back to the client. In addition, the data transmission time is short and the performance is high with the using of socket connection; in which data can also be encrypted to ensure the security of the data.

In this embodiment, the user contacts the off-site maintenance personnel to allow the maintenance personnel to diagnose their own vehicle. Maintenance personnel enters their own diagnosis account through the PC in a remote place and connects the remote server; when the remote server finds the diagnosis equipment corresponding to the target vehicle, a diagnosis instruction is sent to the server, which includes information such as diagnosing the equipment label, obtaining the type of data, and the like. The server thus sends the diagnosis instruction to the corresponding diagnosis equipment. The diagnosis equipment can obtain the real-time data of the vehicle according to the diagnosis instruction when the diagnosis equipment receives the diagnosis instruction sent by the server. Specifically, the diagnosis equipment exchanges the real-time data, through the an automotive Electronic Control Unit (ECU), with an automotive engine system, an Automatic Transmission (AT), an Anti-skid Brake System (ABS), a Supplemental Restraint System (SRS), an Electronic Stability Program (ESP), instrument system, air conditioning system, etc., and obtains the relevant real-time data, in which these data can be the state value of the vehicle parameters, but also can be the fault code and other information.

Step S20, sending the real-time vehicle data to the remote server;
In this embodiment, the diagnosis equipment will send the data to the remote server when the diagnosis equipment acquires the real-time vehicle data. Maintenance personnel can then browse the data in the server to analyze the state of the vehicle remotely through the diagnosis terminal; when the vehicle state changes, since the diagnosis equipment is in the real-time data interaction with the vehicle, the diagnosis terminal will show the dynamic data flow of the vehicle in real time, which is convenient for the remote maintenance personnel to analyze the problem of the vehicle accurately. When the maintenance personnel completes the analysis, the relevant maintenance operation instructions can be entered at the diagnosis terminal and sent to diagnosis equipment by the server.

In the specific implementation, in order to enable vehicle owners and maintenance personnel to keep abreast of the state of the vehicle, when the remote server receives the real-time data sent by the diagnosis equipment, the remote server can send the data information to the terminals of the vehicle owners and maintenance personnel through the way, such as SMS, WeChat, APP information, etc., such that vehicle owners and maintenance personnel can acquire the status of the vehicle.

Step S30, receiving a maintenance operation instruction sent by the remote server and sending a corresponding execution command to the vehicle to perform maintenance according to the maintenance operation instruction.

In this embodiment, the diagnosis equipment will send the corresponding execution command to the vehicle according to the maintenance operation instruction when the diagnosis equipment receives the maintenance operation instruction sent from the remote server, so as to clean up the fault of the vehicle and maintain the vehicle, and realize the remote maintenance.

In this embodiment, the real-time vehicle data of the vehicle is acquired according to the diagnosis instruction by receiving a diagnosis instruction sent from the remote server; sending the real-time vehicle data to the remote server; receiving the maintenance operation instruction sent from the remote server and sending the corresponding execution command to the vehicle to perform maintenance according to the maintenance operation instruction. Through the above methods, the vehicle diagnosis equipment is connected to the vehicle as an on-board equipment for a long time, such that users do not need to repeat the connection operation in each diagnosis, which provides a convenience for users; at the beginning of the diagnosis, the diagnosis equipment directly obtains the real-time vehicle data of the vehicle according to the instructions sent by the remote server, and acquiring the dynamic data flow of the vehicle when the vehicle state changes, which is convenient for the remote maintenance personnel to accurately analyze the vehicle and increases the diagnosis accuracy; when the analysis is completed, the diagnosis equipment can also send the corresponding operation command to the vehicle according to the maintenance operation instruction sent by the remote server to perform the remote maintenance. Therefore, the present application is convenient for the remote diagnosis of the vehicle and improves the diagnosis function, increases the accuracy of the analysis and diagnosis, and realizes the remote maintenance of the vehicle.

As shown in Fig.2, Fig.2 is a schematic flowchart of a second embodiment of a vehicle remote diagnosis method according to the present application.

Based on the embodiment shown in Fig. 1 described above, Step S30 comprises:
Step S31, receiving a fault clearing instruction sent by the remote server and sending a corresponding clearing command to the vehicle according to the fault clearing instruction to clear the fault of the vehicle electronic control unit.

In this embodiment, the maintenance personnel can enter the fault clearing instruction when the maintenance personnel completes the analysis of the vehicle state through the remote server. The remote server will send the fault clearing instruction to the diagnosis equipment. The diagnosis equipment will sends the corresponding clearing command to the vehicle according to the fault clearing instruction to clear the fault of the vehicle electronic control unit when the diagnosis equipment receives the fault clearing instruction.

In this embodiment, the maintenance personnel can eliminate the failure of the electronic control unit (ECU) of the vehicle at any time in the off-site, and it is convenient for the remote diagnosis and maintenance of the vehicle.

As shown in Fig.3, Fig.3 is a schematic flowchart of a third embodiment of a vehicle remote diagnosis method according to the present application.

Based on the embodiment shown in Fig. 1 described above, Step S30 further comprises:
Step S32, receiving a data management instruction sent by the remote server and sending a corresponding management instruction to the vehicle according to the data management instruction to manage the data in the vehicle electronic control unit.

In this embodiment, the maintenance personnel can enter the data management instruction when the analysis of the vehicle state has been completed through the remote server. The remote server will send the data management instruction to the diagnosis equipment. The diagnosis equipment will send a corresponding management instruction to the vehicle according to the data management instruction to manage the data in the vehicle electronic control unit when the diagnosis equipment receives the data management instruction. Specifically, the operation includes the programming to the Electronic Control Unit (ECU), the flushing and upgrading to the vehicle Electronic Control Unit (ECU), and so on.

In this embodiment, the maintenance personnel can program, flush, and upgrade the electronic control unit (ECU) of the vehicle at any time in the off-site, thereby providing convenience for the remote diagnosis and maintenance of the vehicle.

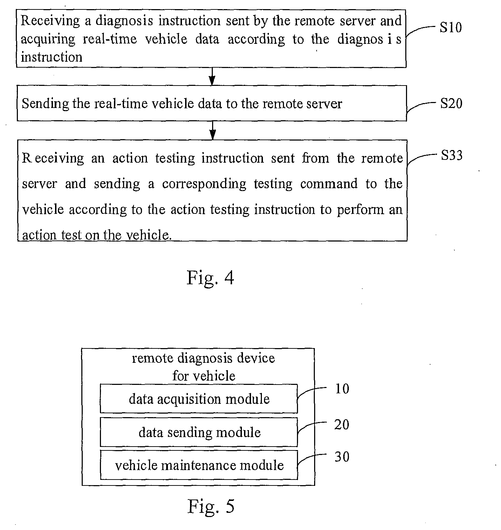

As shown in Fig.4, Fig.4 is a schematic flowchart of a fourth embodiment of a vehicle remote diagnosis method according to the present application.

Based on the embodiment shown in Fig. 1 described above, Step S30 further comprises:
Step S33, receiving an action testing instruction sent from the remote server and sending a corresponding testing command to the vehicle according to the action testing instruction to perform an action test on the vehicle.

In this embodiment, the maintenance personnel can enter the action testing instruction when the analysis of the vehicle state has been completed through the remote server. The remote server will send the action testing instruction to the diagnosis equipment. The diagnosis equipment will send a corresponding testing command to the vehicle according to the action testing instruction to perform an action test on the vehicle when the diagnosis equipment receives the action testing instruction. Specifically, the testing can be the switch test of the door lock, the temperature test of the air conditioner, and so on.

In this embodiment, the maintenance personnel can perform the action test to the vehicle at any time in the off-site, and it is convenient for the remote diagnosis and maintenance of the vehicle.

The application further provides a vehicle remote diagnosis device.

As shown in Fig.5, Fig.5 is a schematic flowchart of functional modules of a first embodiment of a vehicle remote diagnosis device according to the present application.

In this embodiment, the vehicle remote diagnosis device is placed on the vehicle as the on-board equipment, a remote communication connection is established between the vehicle remote diagnosis device and a remote server, the vehicle remote diagnosis device comprises:
a data acquisition module 10 configured to receive a diagnosis instruction sent by the remote server and acquiring real-time vehicle data according to the diagnosis instruction;
in this embodiment, the vehicle remote diagnosis is performed by the vehicle diagnosis device. In the existing diagnosis method, when the diagnosis is required, that the diagnosis cannot be performed until the professional diagnosis device is connected to the OBD connector of the vehicle, and the connection operation must be performed before each diagnosis. In this embodiment, a professional diagnosis device is made into a vehicle diagnosis device, and the diagnosis device is placed on the vehicle as an on-board equipment, so that the diagnosis device can perform the real-time data interaction with the vehicle; a network connection is established between the diagnosis device and the remote server at the same time, such that the data interaction can be performed between the diagnosis device and the remote server. Thus, the owner of the vehicle, at each time for remote diagnosis, does not need to perform the connection operation manually but can directly contact the 4S shop, maintenance plant or personal technician, and the maintenance personnel can thus initiate a remote diagnosis through the diagnosis terminal (PC, mobile APP or WEB page) and obtain the real-time data of the vehicle through the remote server and the diagnosis device, in order to analyze the vehicle accurately, some relevant maintenance operation instructions can be sent to the vehicle at the same time, such that the diagnosis and maintenance can be achieved. Specifically, the diagnosis device is connected to the vehicle as an on-board equipment for a long time through the OBD diagnosis pedestal of the vehicle, wherein the OBD diagnosis pedestal can be an ordinary OBD diagnosis pedestal or a type II OBD diagnosis pedestal; the diagnosis device can also be integrated in the vehicle to connected with the vehicle bus, or installed in the vehicle directly to connected with the vehicle bus as an independent device, wherein the type of the bus could be CANBUS, certainly, in addition to the vehicle bus, the connection can also be performed through the K line, J1850, and so on. The user can choose an appropriate way to install the diagnosis device according to the actual situation; the network connection between the diagnosis device and remote server can be achieved by a socket connection, the remote server can send data directly to the client to achieve real-time data interaction through the socket connection; In contrast, if an HTTP connection is established between the two sides, the server needs to wait until the client sends a request before the data can be passed back to the client. In addition, the data transmission time is short and the performance is high with the using of socket connection; in which data can also be encrypted to ensure the security of the data;
a data sending module 20 configured to send the real-time vehicle data to the remote server;
in this embodiment, the vehicle remote diagnosis device will send the data to the remote server when the vehicle remote diagnosis device acquires the real-time vehicle data. Maintenance personnel can then browse the data in the server to analyze the state of the vehicle remotely through the diagnosis terminal; when the vehicle state changes, since the vehicle remote diagnosis device is in the real-time data interaction with the vehicle, the diagnosis terminal will show the dynamic data flow of the vehicle in real time, which is convenient for the remote maintenance personnel to analyze the problem of the vehicle accurately. When the maintenance personnel completes the analysis, the relevant maintenance operation instructions can be entered at the diagnosis terminal and sent to diagnosis device by the server;
in the specific implementation, in order to enable vehicle owners and maintenance personnel to keep abreast of the state of the vehicle, when the remote server receives the real-time data sent by the diagnosis device, the remote server can send the data information to the terminals of the vehicle owners and maintenance personnel through the way, such as SMS, WeChat, APP information, etc., such that vehicle owners and maintenance personnel can acquire the status of the vehicle;
a vehicle maintenance module 30 configured to receive a maintenance operation instruction sent by the remote server and sending a corresponding execution command to the vehicle to perform maintenance according to the maintenance operation instruction.

In this embodiment, the diagnosis device will send the corresponding execution command to the vehicle according to the maintenance operation instruction when the diagnosis device receives the maintenance operation instruction sent from the remote server, so as to clean up the fault of the vehicle and maintain the vehicle, and realize the remote maintenance.

In this embodiment, the real-time vehicle data of the vehicle is acquired according to the diagnosis instruction by receiving a diagnosis instruction sent from the remote server; sending the real-time vehicle data to the remote server; receiving the maintenance operation instruction sent from the remote server and sending the corresponding execution command to the vehicle to perform maintenance according to the maintenance operation instruction. Through the above methods, the vehicle diagnosis device is connected to the vehicle as an on-board equipment for a long time, such that users do not need to repeat the connection operation in each diagnosis, which provides a convenience for users; at the beginning of the diagnosis, the diagnosis device directly obtains the real-time vehicle data of the vehicle according to the instructions sent by the remote server, and acquiring the dynamic data flow of the vehicle when the vehicle state changes, which is convenient for the remote maintenance personnel to accurately analyze the vehicle and increases the diagnosis accuracy; when the analysis is completed, the diagnosis device can also send the corresponding operation command to the vehicle according to the maintenance operation instruction sent by the remote server to perform the remote maintenance. Therefore, the present application is convenient for the remote diagnosis of the vehicle and improves the diagnosis function, increases the accuracy of the analysis and diagnosis, and realizes the remote maintenance of the vehicle.

Also with reference to Fig. 5, the data acquisition module 10 in the Fig. 5, is further configured to acquire the real-time vehicle data of the vehicle through a vehicle electronic control unit.

In this embodiment, the maintenance personnel can enter the fault clearing instruction when the maintenance personnel completes the analysis of the vehicle state through the remote server. The remote server will send the fault clearing instruction to the diagnosis device. The diagnosis device will sends the corresponding clearing command to the vehicle according to the fault clearing instruction to clear the fault of the vehicle electronic control unit when the diagnosis device receives the fault clearing instruction.

In this embodiment, the maintenance personnel can eliminate the failure of the electronic control unit (ECU) of the vehicle at any time in the off-site, and it is convenient for the remote diagnosis and maintenance of the vehicle.

Also with reference to Fig. 5, the vehicle maintenance module 30 in the Fig. 5, is further configured to receive a fault clearing instruction sent by the remote server and sending a corresponding clearing command to the vehicle according to the fault clearing instruction to clear the fault of the vehicle electronic control unit.

In this embodiment, the maintenance personnel can enter the data management instruction when the analysis of the vehicle state has been completed through the remote server. The remote server will send the data management instruction to the diagnosis device. The vehicle remote diagnosis device will send a corresponding management instruction to the vehicle according to the data management instruction to manage the data in the vehicle electronic control unit when the vehicle remote diagnosis device receives the data management instruction. Specifically, the operation includes the programming to the Electronic Control Unit (ECU), the flushing and upgrading to the vehicle Electronic Control Unit (ECU), and so on.

In this embodiment, the maintenance personnel can program, flush, and upgrade the electronic control unit (ECU) of the vehicle at any time in the off-site, thereby providing convenience for the remote diagnosis and maintenance of the vehicle.

Also with reference to Fig. 5, the vehicle maintenance module 30 in the Fig. 5 is further configured to receive a data management instruction sent by the remote server and sending a corresponding management instruction to the vehicle according to the data management instruction to manage the data in the vehicle electronic control unit.

In this embodiment, the maintenance personnel can enter the action testing instruction when the analysis of the vehicle state has been completed through the remote server. The remote server will send the action testing instruction to the vehicle remote diagnosis device. The vehicle remote diagnosis device will send a corresponding testing command to the vehicle according to the action testing instruction to perform an action test on the vehicle when the vehicle remote diagnosis device receives the action testing instruction. Specifically, the testing can be the switch test of the door lock, the temperature test of the air conditioner, and so on.

In this embodiment, the maintenance personnel can perform the action test to the vehicle at any time in the off-site, and it is convenient for the remote diagnosis and maintenance of the vehicle.

The aforementioned embodiments are only preferred embodiments of the present application, and are not intended for limiting the present application. Any modification, equivalent replacement, improvement, and so on, which are made within the spirit and the principle of the present application, should be included in the protection scope of the present application.

## Claims

1. A vehicle remote diagnosis method, wherein the diagnosis method is applied to a vehicle diagnosis equipment which is placed on the vehicle as an on-board equipment, a remote communication connection is established between the diagnosis equipment and a remote server, wherein the diagnosis method comprises:
receiving a diagnosis instruction sent by the remote server and acquiring real-time vehicle data according to the diagnosis instruction;
sending the real-time vehicle data to the remote server; and
receiving a maintenance operation instruction sent by the remote server and sending a corresponding execution command to the vehicle to perform maintenance according to the maintenance operation instruction.

2. The vehicle remote diagnosis method of claim 1, wherein the step of acquiring real-time vehicle data of the vehicle according to the diagnosis instruction comprises:
acquiring the real-time vehicle data of the vehicle through a vehicle electronic control unit according to the diagnosis instruction.

3. The vehicle remote diagnosis method of claim 1, wherein the step of receiving a maintenance operation instruction sent from the remote server and sending a corresponding execution command to the vehicle according to the maintenance operation instruction to perform maintenance comprises:
receiving a fault clearing instruction sent by the remote server and sending a corresponding clearing command to the vehicle according to the fault clearing instruction to clear the fault of the vehicle electronic control unit.

4. The vehicle remote diagnosis method of claim 1, wherein the step of receiving a maintenance operation instruction sent from the remote server and sending a corresponding execution command to the vehicle according to the maintenance operation instruction to perform maintenance further comprises:
receiving a data management instruction sent by the remote server and sending a corresponding management instruction to the vehicle according to the data management instruction to manage the data in the vehicle electronic control unit.

5. The vehicle remote diagnosis method of claim 1, wherein the step of receiving a maintenance operation instruction sent from the remote server and sending a corresponding execution command to the vehicle according to the maintenance operation instruction to perform maintenance further comprises:
receiving an action testing instruction sent from the remote server and sending a corresponding testing command to the vehicle according to the action testing instruction to perform an action test on the vehicle.

6. The vehicle remote diagnosis method of claim 1, wherein the diagnosis equipment is connected to the vehicle through a diagnosis pedestal of the OBD (On-Board Diagnostics) of the vehicle; or
the diagnosis equipment is integrated in the vehicle and connected with the vehicle bus; or
the diagnosis equipment is installed as an independent equipment in the vehicle and connected to the vehicle bus.

7. The vehicle remote diagnosis method of claim 1, wherein a real-time socket connection is established between the diagnosis equipment and the remote server.

8. A vehicle remote diagnosis device, wherein the diagnosis device is placed on the vehicle as an on-board equipment, a remote communication connection is established between the diagnosis device and a remote server, wherein the diagnosis device comprises:
a data acquisition module configured to receive a diagnosis instruction sent by the remote server and acquiring real-time vehicle data according to the diagnosis instruction;
a data sending module configured to send the real-time vehicle data to the remote server; and
a vehicle maintenance module configured to receive a maintenance operation instruction sent by the remote server and sending a corresponding execution command to the vehicle to perform maintenance according to the maintenance operation instruction.

9. The vehicle remote diagnosis device of claim 8, wherein the data sending module is further configured to acquire the real-time vehicle data of the vehicle through a vehicle electronic control unit.

10. The vehicle remote diagnosis device of claim 8, wherein the vehicle maintenance module is further configured to receive a fault clearing instruction sent by the remote server and sending a corresponding clearing command to the vehicle according to the fault clearing instruction to clear the fault of the vehicle electronic control unit.

11. The vehicle remote diagnosis device of claim 8, wherein the vehicle maintenance module is further configured to receive a data management instruction sent by the remote server and sending a corresponding management instruction to the vehicle according to the data management instruction to manage the data in the vehicle electronic control unit.

12. The vehicle remote diagnosis device of claim 8, wherein the vehicle maintenance module is further configured to receive an action testing instruction sent from the remote server and sending a corresponding testing command to the vehicle according to the action testing instruction to perform an action test on the vehicle.

13. The vehicle remote diagnosis device of claim 8, wherein the vehicle remote diagnosis device is connected to the vehicle through a diagnosis pedestal of the OBD of the vehicle; or
the vehicle remote diagnosis device is integrated in the vehicle and connected with the vehicle bus; or
the vehicle remote diagnosis device is installed as an independent equipment in the vehicle and connected to the vehicle bus.

14. The vehicle remote diagnosis device of claim 8, wherein a real-time socket connection is established between the vehicle remote diagnosis device and the remote server.
